# EUROPÄISCHE PATENTANMELDUNG

(11) **EP 4 814 334 A1**
(43) Veröffentlichungstag der Anmeldung: **30.09.2026**
(21) Anmeldenummer: 26163888.6
(22) Anmeldetag: 11.03.2026
(51) Int. Cl.: F16D 65/12, B23K 26/08, B23K 26/144, B23K 26/342

(54) **VERFAHREN ZUM BESCHICHTEN EINER BREMSSCHEIBE AUS GRAUGUSS ODER STAHL**

(30) Priorität: 24.03.2025 DE 102025111279; 19.05.2025 DE 102025119339
(71) Anmelder: Volkswagen Aktiengesellschaft, 38440 Wolfsburg (DE)
(72) Erfinder: Zimmermann, Jason, 38440 Wolfsburg (DE); Schöwe, Sebastian, 38440 Wolfsburg (DE); Harke, Markus, 38440 Wolfsburg (DE)

(57) **Zusammenfassung**

Verfahren zum Beschichten einer Bremsscheibe (1) aus Grauguss oder Stahl, wobei die Bremsscheibe (1) einen Grundkörper und wenigstens einen sich davon senkrecht zu einer Drehachse der Bremsscheibe (1) radial erstreckenden, scheibenartigen Körper (11) mit einer Fläche aufweist, deren Flächennormale parallel zur Drehachse ist. Auf die Fläche des scheibenartigen Körpers (11) wird durch ein Werkzeug im Laserauftragsschweißen eine Beschichtung aufgebracht, die aus wenigstens einer, auf die Fläche des scheibenartigen Körpers (11) aufgebrachten Schicht besteht. Während der Aufbringung der wenigstens einen Schicht wird das Werkzeug gegenüber dem scheibenartigen Körper (11), zumindest für eine überwiegende Zeitdauer des Verfahrens, mit einem Spurversatz (sv) und mit einem Vorschub (v) bewegt, wobei durch das Werkzeug dem scheibenartigen Körper (11) wenigstens ein Laserstrahl (14) sowie ein zu schmelzendes Pulvermaterial mit einem Pulvermassenstrom zugeführt wird.

Die Erfindung ist dadurch gekennzeichnet, dass während der Aufbringung der wenigstens einen Schicht der Spurversatz (sv) des Werkzeugs zeitweise verändert wird.

## Beschreibung

Die Erfindung betrifft ein Verfahren zum Beschichten einer Bremsscheibe aus Grauguss oder Stahl mit den Merkmalen vom Oberbegriff des Patentanspruchs 1.

Die Beschichtung von Bremsscheiben soll dem Zweck dienen, beim Bremsen von Kraftfahrzeugen erzeugte Feinstaubemissionen spürbar zu senken und dadurch die Umwelt so wenig wie möglich zu belasten. Die Beschichtung erfolgt auf der Fläche oder auf den Flächen eines scheibenartigen Körpers der Bremsscheibe. Dabei wird zunächst eine Schicht aus Edelstahl aufgebracht, die wiederum mit einer Schicht aus einem Verbund aus einer Eisenlegierungsmatrix mit eingelagerten Hartpartikeln beschichtet wird. Beide Schichten werden mit Hilfe des Laserauftragsschweißens auf das jeweilige Substrat aufgebracht.

Bei der Beschichtung wird zum einen die zu beschichtende Bremsscheibe mit einer vertikal ausgerichteten Rotationsachse in Rotation versetzt. Zum anderen wird das Werkzeug, durch welches sowohl das Beschichtungsmaterial als auch der Laserstrahl auf das zu beschichtende Substrat gerichtet werden, radial über das Substrat bewegt. Wird das Werkzeug radial von innen nach außen bewegt, so wird es beim Auftrag der ersten Schicht bis zum Außendurchmesser der Bremsscheibe verfahren. Entsprechend erfolgt das Auftragen der zweiten Schicht ebenfalls durch das Verfahren des Werkzeugs bis zum Außendurchmesser der Bremsscheibe.

Man strebt beim Laserauftragsschweißen aus Qualitätsgründen eine gleichmäßige Dicke einer aufgebrachten Schicht an. Die Schichtdicke einer aufgebrachten Schicht ergibt sich aus dem Vorschub und dem Spurversatz des Werkzeugs und aus dem durch das Werkzeug der Bremsscheibe zugeführten Pulvermassenstrom.

Als *Vorschub v* soll im Rahmen dieser Erfindung die Geschwindigkeit eines Punktes bzw. des vom Werkzeug erzeugten Laserstrahls auf dem Substrat in Abhängigkeit seines Abstands zum Mittelpunkt der Bremsscheibe und deren Drehzahl verstanden werden. Er ist wie folgt definiert: $v = 2 π * r * n ,$ wobei
v = Vorschub
r = Abstand zum Mittelpunkt der Bremsscheibe
n = Drehzahl der Bremsscheibe

Unter *Spurversatz* wird im Rahmen der vorliegenden Erfindung der Weg verstanden, den das Werkzeug bzw. der von diesem erzeugte Laserstrahl während einer Umdrehung der Bremsscheibe mit einer linearen Bewegung, radial zum Mittelpunkt der Bremsscheibe gesehen, zurücklegt. In der Regel ist der Spurversatz radial nach außen gerichtet.

Als *Pulvermassenstrom* wird die Masse an aufzuschmelzendem Pulvermaterial verstanden, die der Bremsscheibe durch das Werkzeug innerhalb einer bestimmten Zeiteinheit zugeführt wird.

Allerdings besteht beim Laserauftragsscheißen das Problem, dass Schäden durch einen sogenannten Overspray am beschichteten Werkstück in Form von Schichtunterwanderung unter korrosiven Bedingungen und auch an der Beschichtungsanlage auftreten können. Ein Overspray tritt insbesondere dann auf, wenn sich das Werkzeug zu Beginn und am Ende des Beschichtungsprozesses radial außerhalb der zu beschichtenden Fläche befindet.

Als *Overspray* wird ein radial neben der beschichteten Fläche liegender Bereich der Bremsscheibe oder auch der Beschichtungsanlage verstanden, auf den erhitzte Hartpartikel beim Aufbringen einer Schicht, insbesondere der zweiten Schicht durch das Laserauftragsschweißen auftreffen und auf diesem haften bleiben bzw. einschmelzen. Diese lassen sich nur äußerst schwer, mitunter gar nicht entfernen.

Einem Overspray kann man dadurch entgegenwirken, indem der radiale Überstand des Werkzeugs vermindert wird. Hierdurch leidet aber die Beschichtungsqualität, insbesondere wird dadurch an den Randbereichen der zu beschichtenden Fläche keine ausreichende Schichtdicke erzeugt.

In der DE 10 2021 214 946 A1 wird eine Bremsscheibe für eine Reibungsbremse eines Kraftfahrzeugs beschrieben, welches einen Reibungsabschnitt mit einer Reibfläche und einen Befestigungsabschnitt zur fahrzeugseitigen Befestigung aufweist. Der Reibungsabschnitt und der Befestigungsabschnitt sind an einem Grundkörper aus Grauguss oder Stahl ausgebildet. Als Reibfläche ist an dem Reibungsabschnitt auf den Grundkörper eine Verschleißschutzschicht durch Laserauftragsschweißen aufgebracht. Die Verschleißschutzschicht setzt sich über die Reibfläche hinaus in einen zur Reibfläche angewinkelten Bereich fort und endet dort. Im angewinkelten Bereich des Grundkörpers ist die Verschleißschutzschicht deckend und zum Grundkörper spaltfrei aufgebracht. Außerhalb der Reibfläche liegende Oberflächenabschnitte können mit einer Korrosionsschutzschicht versehen sein, welche die Verschleißschutzschicht im angewinkelten Bereich überlappt.

Der vorliegenden Erfindung liegt die Aufgabe zu Grunde, ein Verfahren zum Beschichten einer Bremsscheibe aus Grauguss oder Stahl vorzuschlagen, mit dem eine hohe Beschichtungsqualität der Bremsscheibe erzielbar ist. Insbesondere soll über den gesamten zu beschichtenden Bereich der Bremsscheibe eine ausreichende Schichtdicke einer aufgebrachten Schicht erzeugt werden können, auch wenn Maßnahmen zur Verringerung des Oversprays ergriffen werden.

Diese Aufgaben werden durch ein Verfahren mit den Merkmalen von Patentanspruch 1 gelöst. Vorteilhafte Aus- beziehungsweise Weiterbildungen der Erfindung sind abhängigen Ansprüchen zu entnehmen.

Die Erfindung geht von einem Verfahren zum Beschichten einer Bremsscheibe aus Grauguss oder Stahl aus. Dabei weist die Bremsscheibe einen Grundkörper und wenigstens einen sich davon senkrecht zu einer Drehachse der Bremsscheibe radial erstreckenden, scheibenartigen Körper mit einer Fläche auf, deren Flächennormale parallel zur Drehachse ist. Auf die Fläche des scheibenartigen Körpers wird durch ein Werkzeug im Laserauftragsschweißen eine Beschichtung aufgebracht, die aus wenigstens einer, auf die Fläche des scheibenartigen Körpers aufgebrachten Schicht besteht. Dabei weist das Werkzeug während der Aufbringung der wenigstens einen Schicht, zumindest für eine überwiegenden Zeitdauer des Verfahrens, gegenüber dem scheibenartigen Körper einen Spurversatz und einen Vorschub auf, wobei dem scheibenartigen Körper durch das Werkzeug wenigstens ein Laserstrahl sowie ein zu schmelzendes Pulvermaterial mit einem Pulvermassenstrom zugeführt wird.

Die Erfindung schlägt nun vor, dass während der Aufbringung der wenigstens einen Schicht der Spurversatz des Werkzeugs zeitweise verändert wird.

Der Spurversatz wird also nicht mehr, wie bislang üblich, über die ganze radiale Wegstrecke des Werkzeugs konstant gehalten, sondern er wird zumindest einmal verändert. Durch dieses Merkmal wird die Grundvoraussetzung dafür gegeben, dass die Bremsscheibe über den gesamten zu beschichtenden Bereich mit ausreichenden Schichtdicken beschichtet werden kann, auch wenn das Werkzeug aufgrund von gewählten Start- und Endpositionen einen radialen Überstand zu der zu beschichtenden Fläche aufweisen sollte. Der Spurversatz wird an ausgewählten Bereichen der Bremsscheibe insbesondere vermindert. Auf diese Weise kann den ausgewählten Bereichen mehr Pulvermaterial zugeführt werden.

Gemäß einer ersten Weiterbildung werden während der Aufbringung der wenigstens einen Schicht zusätzlich noch der Vorschub und/oder der Pulvermassenstrom zeitweise verändert. Diese Weiterbildung ermöglicht eine noch genauere Beeinflussung der Schichtdicken in ausgewählten Bereichen. Insbesondere kann in ausgewählten Bereichen zur Erhöhung des zugeführten Pulvermaterials der Vorschub, also die Drehzahl der Bremsscheibe vermindert werden. Der Pulvermassenstrom hingegen kann zur Erhöhung des zugeführten Pulvermaterials erhöht werden.

Eine höchst vorteilhafte Ausbildung des Erfindungsgedankens ist dadurch gekennzeichnet, dass das Werkzeug nach einer zurückgelegten, ersten radialen Wegstrecke oder nach einem abgelaufenen, ersten Zeitabschnitt, über eine zweite radiale Wegstrecke hinweg, welche einem Großteil einer Radialerstreckung des scheibenartigen Körpers entspricht, mit einem konstanten Spurversatz eines bestimmten Wertes bewegt wird. Dabei schließen sich an die zweite radiale Wegstrecke eine dritte radiale Wegstrecke oder ein dritter Zeitabschnitt an, wobei der Spurversatz des Werkzeugs während der ersten radialen Wegstrecke oder während des ersten Zeitabschnitts und während der dritten radialen Wegstrecke oder während des dritten Zeitabschnitts unter dem Wert des Spurversatzes in der zweiten radialen Wegstrecke liegt.

Durch diese Ausbildung kann der Prozess sehr genau auf kritische Bereiche in Nähe der radialen Innenkante und in Nähe der radialen Außenkante abgestimmt werden. Um einen Overspray zu reduzieren, sollte das Werkzeug während des Beschichtungsprozesses radial nicht vollständig außerhalb des scheibenartigen Körpers positioniert werden oder dahin gelangen. Dadurch entsteht aber der Nachteil, dass der Durchmesser des Lasers nicht ganz ausgenutzt werden kann. Durch konzentrisch zum Laser zugeführten Pulvermassenstrom betrifft das auch das zugeführte Pulvermaterial. Die genannten Merkmale führen insbesondere dazu, dass in den kritischen Bereichen mehr Pulvermaterial zugeführt und aufgeschmolzen werden kann.

Ein ähnlich positiver Effekt kann dadurch erzielt werden, dass das Werkzeug nach einer zurückgelegten, ersten radialen Wegstrecke oder nach einem abgelaufenen, ersten Zeitabschnitt, über eine zweite radiale Wegstrecke hinweg, welche einem Großteil einer Radialerstreckung des scheibenartigen Körpers entspricht, mit einem konstanten Vorschub eines bestimmten Wertes bewegt wird. Dabei schließen sich an die zweite radiale Wegstrecke eine dritte radiale Wegstrecke oder ein dritter Zeitabschnitt an, wobei der Vorschub des Werkzeugs während der ersten radialen Wegstrecke oder während des ersten Zeitabschnitts und während der dritten radialen Wegstrecke oder während des dritten Zeitabschnitts unter dem Wert des Vorschubs in der zweiten radialen Wegstrecke liegt.

Auch diese Weiterbildung trägt dazu bei, dass durch den Beschichtungsprozess eine gleichmäßige Beschichtung des scheibenartigen Körpers über die gesamte radiale Länge des scheibenartigen Körpers erzielt werden kann. Insbesondere kann durch den reduzierten Vorschub bei gleichbleibendem Pulvermassenstrom in den kritischen Bereichen mehr Pulvermaterial auf den scheibenartigen Körper gebracht und aufgeschmolzen werden kann.

Nach einer anderen Ausbildung des Verfahrens führt das Werkzeug nach einer zurückgelegten, ersten radialen Wegstrecke oder nach einem abgelaufenen, ersten Zeitabschnitt über eine zweite radiale Wegstrecke hinweg, welche einem Großteil einer Radialerstreckung des scheibenartigen Körpers entspricht, dem scheibenartigen Körper einen konstanten Pulvermassenstrom eines bestimmten Wertes zu. Dabei schließen sich an die zweite radiale Wegstrecke eine dritte radiale Wegstrecke oder ein dritter Zeitabschnitt an, wobei der zugeführte Pulvermassenstrom während der ersten radialen Wegstrecke oder während des ersten Zeitabschnitts und während der dritten radialen Wegstrecke oder während des dritten Zeitabschnitts über dem Wert des zugeführten Pulvermassenstroms in der zweiten radialen Wegstrecke liegt. Auch hierdurch ist es möglich, in den kritischen Bereichen mehr Pulvermaterial auf den scheibenartigen Körper aufbringen und aufschmelzen zu können.

Es ist anzumerken, dass der Spurversatz, der Vorschub und auch der Pulvermassenstrom sowohl stetig über einen bestimmten Zeitabschnitt als auch sprunghaft zu einem bestimmten Zeitpunkt verändert werden können.

Gemäß einer Weiterbildung wird das Werkzeug beim Aufbringen der wenigstens einen Schicht in einer Startposition so positioniert und/oder am Ende der Beschichtung so weit radial über das jeweils zu beschichtende Substrat bewegt, dass ein durch einen Laserstrahl des Werkzeugs erzeugter Laserspot höchstens zur Hälfte radial über einen Innen- oder Außendurchmesser des scheibenartigen Körpers hinausragt. Dies trägt zu einer Verminderung des Oversprays bei, wobei dennoch im Bereich der Innen- und Außenkanten der Wirkbereich des Werkzeugs ausreichend ausgenutzt werden kann.

Insbesondere wird es bei einer solchen Weiterbildung als zweckmäßig erachtet, wenn das Werkzeug beim Aufbringen der wenigstens einen Schicht in einer Startposition so positioniert und/oder am Ende der Beschichtung so weit radial über das jeweils zu beschichtende Substrat bewegt wird, dass ein durch einen Laserstrahl des Werkzeugs erzeugter Laserspot radial innerhalb des scheibenartigen Körpers liegt und mit seinem Außendurchmesser an einen Innen- oder Außendurchmesser des scheibenartigen Körpers radial angrenzt.

Hierdurch kann eine besonders deutliche Verringerung des Oversprays, unter Umständen sogar dessen Vermeidung erreicht werden. Gleichzeitig kann durch das Werkzeug noch eine gute Beschichtungsqualität erzielt werden.

Es wird in einer weiteren, höchst vorteilhaften Ausbildung noch vorgeschlagen, dass zu Beginn und/oder zum Ende des Aufbringens der wenigstens einen Schicht der Spurversatz des Werkzeugs zumindest für eine Umdrehung des scheibenartigen Körpers auf den Wert Null gesetzt wird. Es hat sich gezeigt, dass dadurch auch in den Randbereichen eine Beschichtung mit sehr hoher Qualität erzielt werden konnte.

Dies konnte noch dadurch verbessert werden, wenn zu Beginn und/oder zum Ende des Aufbringens der wenigstens einen Schicht der Spurversatz des Werkzeugs für drei, vier oder fünf Umdrehungen des scheibenartigen Körpers auf den Wert Null gesetzt wurde.

Abschließend sei nochmals ausdrücklich darauf hingewiesen, dass die im Laserauftragsschweißen auf den scheibenartigen Körper der Bremsscheibe aufgebrachte Beschichtung wenigstens aus einer Schicht besteht. Mit anderen Worten ist es also denkbar, dass die aufgebrachte Beschichtung aus einer Schicht, aus zwei oder auch aus mehr Schichten besteht, die aufeinander aufgebracht sind.

Jede der Schichten kann dabei aus Metall, aus einer Metalllegierung, aus einer Matrix aus Metall mit eingelagerten Hartstoffpartikeln oder aus einer Matrix aus einer Metalllegierung mit eingelagerten Hartstoffpartikeln bestehen.

Beispielsweise ist es denkbar, dass die Beschichtung aus zwei Schichten besteht. Dabei kann die erste Schicht aus Edelstahl bestehen, wobei die zweite, auf die erste Schicht aufgebrachte Schicht ein Verbund aus einer Eisenlegierungsmatrix mit eingelagerten Hartpartikeln sein kann.

Beim Aufbringen einer ersten und einer zweiten Schicht haben sich als besonders gut geeignete Verfahrensparameter zur Erzielung einer hohen Beschichtungsqualität bewährt, wenn der Spurversatz, über die besagte, zweite radiale Wegstrecke mit konstantem Spurversatz hinweg, beim Aufbringen der ersten Schicht in einem Bereich zwischen etwa 0,30 mm/U und etwa 0,45 mm/U, bevorzugt bei etwa 0,37 mm/U und beim Aufbringen der zweiten Schicht in einem Bereich zwischen etwa 0,55 mm/U und etwa 0,75 mm/U, bevorzugt bei etwa 0,64 mm/U lag. Dabei wurde der Spurversatz zu Beginn und zum Ende der Beschichtung, also vor und nach einem zweiten Zeitabschnitt für die zweite radiale Wegstrecke des Werkzeugs mit konstantem Spurversatz, für drei Umdrehungen auf den Wert Null gesetzt.

Durch das erfindungsgemäße Verfahren werden die Schichtdicken einer aufgebrachten Schicht im radialen Beschichtungseinlauf sowie Beschichtungsauslauf erhöht. Hierdurch wird nach der Beschichtung eine Nachbearbeitung dieser Bereiche durch Schleifen ermöglicht, was zu einer deutlichen Verbesserung der Optik führt. Während die auf herkömmliche Weise beschichteten Bremsscheiben einen rauen Beschichtungseinlauf sowie Beschichtungsauslauf aufwiesen, zeigen die nach dem erfindungsgemäßen Verfahren beschichteten Bremsscheiben in diesen Bereichen ein metallisch glänzendes Aussehen, mit einem vom Beschichtungsprozess kommenden 45° geneigten sowie weniger rauen Beschichtungseinlauf bzw. -auslauf.

Des Weiteren kann durch die mögliche Nachbearbeitung ein ansonsten bestehender, scharfkantiger Grad entfernt werden. Ohne diesen Grat kann das Handling durch die Werker und auch im späteren Kundendienst deutlich verbessert werden.

Ein bevorzugtes Ausführungsbeispiel der Erfindung ist in den Figuren dargestellt und wird anhand der Figuren in der nachfolgenden Beschreibung näher erläutert. Dadurch werden auch noch weitere Merkmale und Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht oder zumindest nicht immer maßstabsgetreu. In manchen Figuren können Proportionen oder Abstände übertrieben dargestellt sein, um Merkmale eines Ausführungsbeispiels deutlicher hervorheben zu können.

Es zeigen, jeweils schematisch
- Fig. 1: einen Rohling einer Bremsscheibe, wie er für das Verfahren verwendet werden kann, in einer äußerst schematischen, schnittähnlichen Darstellung,
- Fig. 2: eine Darstellung des Verfahrens, wobei der scheibenartige Körper der Bremsscheibe durch eine radiale Bewegung eines Werkzeugs von innen nach außen mit einer Beschichtung versehen wird, in einer ersten Ausführungsform,
- Fig. 3: eine Darstellung einer Veränderung des Spurversatzes während der Beschichtung der Bremsscheibe gemäß Fig. 2,
- Fig. 4: eine Darstellung einer Veränderung des Vorschubs während der Beschichtung der Bremsscheibe gemäß Fig. 2,
- Fig. 5: eine Darstellung des Verfahrens, wobei der scheibenartige Körper der Bremsscheibe durch eine radiale Bewegung eines Werkzeugs von innen nach außen mit einer Beschichtung versehen wird, in einer zweiten Ausführungsform und
- Fig. 6: eine Darstellung einer Veränderung des Spurversatzes während der Beschichtung der Bremsscheibe gemäß Fig. 5.

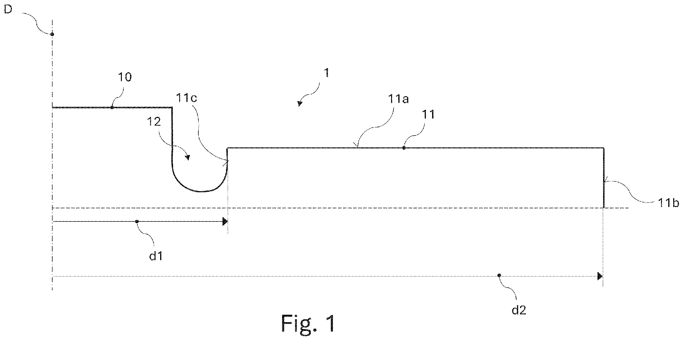

In Fig. 1 ist eine Kontur eines Rohlings einer Bremsscheibe 1 dargestellt, die als Ausgangspunkt für das Verfahren verwendet werden kann. Die Darstellung ist eine äußerst schematische Darstellung, die auch für die folgenden Figuren beibehalten wird. Die Bremsscheibe 1 ist aus Grauguss hergestellt. Sie weist einen nabenartigen Grundkörper 10 auf. Von dem Grundkörper 10 erstreckt sich radial ein scheibenartiger Körper 11. Von der Bremsscheibe 1 sind nur die für das Verständnis der Erfindung wesentlichen Bereiche dargestellt.

Der Grundkörper 10 ist topfartig ausgebildet und dient zur Befestigung der Bremsscheibe 1 an einem nicht dargestellten Radträger eines Kraftfahrzeugs. Der Grundkörper 10 ist über eine muldenartige Vertiefung 12, welche als Wärmeausgleichsnut dient, mit dem scheibenartigen Körper 11 verbunden. Der scheibenartige Körper 11 weist eine Fläche 11a auf, deren Flächennormale parallel zu einer Drehachse D der Scheibenbremse 1 ist. Die Fläche 11a geht radial außenseitig in eine Randfläche 11b und radial innenseitig in eine Randfläche 11c über. Die Randflächen 11b und 11c nehmen mit der Fläche 11a einen Winkel α von etwa 90 Grad, bevorzugt 90 Grad ein. Der scheibenartige Körper 11 bestimmt radial außen einen Außendurchmesser d2 und radial innen einen Innendurchmesser d1 der Bremsscheibe 1. Da horizontal nur eine Hälfte der Bremsscheibe 1 dargestellt ist, existiert also noch eine weitere, der Fläche 11a gegenüberliegende Fläche des scheibenartigen Körpers 11. Für diese gilt das im Folgenden beschriebene Verfahren ebenfalls.

Dieser Rohling einer Bremsscheibe 1 wird nun einer Beschichtung im Laserauftragsschweißen unterzogen, bei dem die Fläche 11a des scheibenartigen Körpers 11 mit einer aus zwei Schichten bestehenden Beschichtung versehen wird.

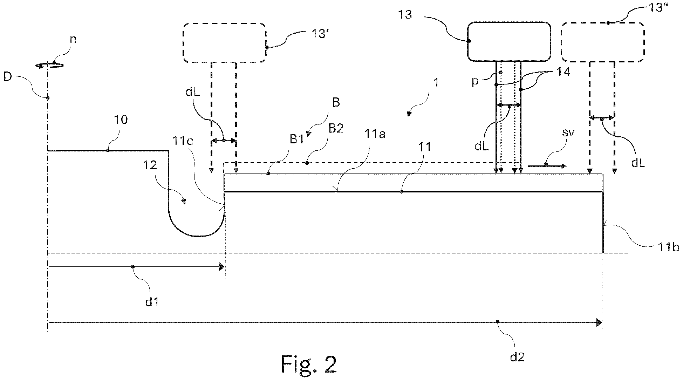

In der Figur 2 ist eine Phase des Beschichtungsverfahrens dargestellt, bei dem die Beschichtung der Fläche 11a durch ein Werkzeug 13 mit einer ersten Schicht B1 bereits erfolgt ist. Zur Beschichtung mit einer zweiten Schicht B2, welche analog zur Beschichtung der ersten Schicht B1 erfolgt, wird durch das Werkzeug 13 ein Laserstrahl 14, dem ebenfalls ein Beschichtungsmaterial als Pulvermaterial p mit einem bestimmten Pulvermassenstrom zugeführt wird auf das jeweilige Substrat gerichtet. Das Werkzeug 13 bewegt sich im Ausführungsbeispiel mit einem Spurversatz sv radial bevorzugt von innen nach außen, während die zu beschichtende Bremsscheibe 1 mit einer bestimmten Drehzahl n um die Drehachse D gedreht wird.

Die erste Schicht B1 besteht aus Edelstahl. Dieser kann bevorzugt ein austenitischer oder ferritischer Edelstahl sein. Beispielsweise ist denkbar, dass die erste Schicht aus einem austenitischen Chrom-Nickel-Molybdän-Stahl besteht, welcher solche Werkstoffeigenschaften aufweist, wie sie dem Werkstoff 1.4404 nach der Norm EN10027-2 oder dem Werkstoff 316L nach der Norm AISI entsprechen. Je nach Werkstoffeigenschaften der Bremsscheibe ist es jedoch alternativ denkbar und hat sich als vorteilhaft erwiesen, wenn die erste Schicht aus einem ferritischen Edelstahl besteht, welcher solche Werkstoffeigenschaften aufweist, wie sie dem Werkstoff 1.4016 nach der Norm DIN EN 10027-2 oder dem Werkstoff 430L nach der Norm AISI entsprechen.

Die zweite Schicht B2 weist eine Eisenlegierungsmatrix auf, welche ebenfalls bevorzugt aus den bereits genannten Werkstoffen 316L oder 430L besteht. Die Hartpartikel können bevorzugt aus einer Legierung von Titancarbid und Ferrochrom (TiC-FeCr) oder auch nur aus Titancarbid oder Wolframcarbid bestehen.

Durch die erste und die zweite Schicht B1 und B2 wird eine Beschichtung B gebildet, die haltbar und widerstandsfähig ist und darüber hinaus bei Bremsvorgängen wenig Feinstaubemissionen hervorruft.

Des Weiteren sind die Positionen des Werkzeugs 13 auch zu Beginn und am Ende der Beschichtung der Fläche 11a mit der zweiten Schicht B2 gestrichelt dargestellt (vgl. 13' und 13"). Hierbei ist erkennbar, dass das Werkzeug 13 zu Beginn der Beschichtung so positioniert wurde, dass ein Außendurchmesser dL des Laserstrahls 14 und damit ein von diesem erzeugter Laserspot den Innendurchmesser d1 der Bremsscheibe 1 nur etwa zur Hälfte nach außen radial überragt. Auf der anderen Seite wurde das Werkzeug 13 nur so weit nach außen bewegt, dass ein Außendurchmesser dL des Laserstrahls 14 und damit ein von diesem erzeugter Laserspot den Außendurchmesser d2 der Bremsscheibe 1 ebenfalls nur etwa zur Hälfte nach außen radial überragt. Auf diese Weise kann es eingegrenzt werden, dass der Laserstrahl 14 mit dem zugeführten Pulvermaterial p als Overspray unkontrolliert an andere Stellen außerhalb des scheibenartigen Körpers 11 gelangen kann. Als Overspray wird ein radial neben der beschichteten Fläche (Reibfläche) liegender Bereich der Bremsscheibe 1 verstanden, auf den erhitzte Hartpartikel beim Aufbringen der Beschichtung B, insbesondere der zweiten Schicht B2 durch das Laserauftragsschweißen auftreffen und auf diesem haften bleiben bzw. einschmelzen. Ein Overspray muss in Nacharbeit entfernt werden.

Durch das zu den Rändern des scheibenartigen Körpers 11, also zu dessen Innendurchmesser d1 und dessen Außendurchmesser d2 radial nach innen versetzte Werkzeug 13 wird die Schichtdicke der aufgebrachten Schicht B1 oder B2 in den Randbereichen des scheibenartigen Körpers 11 beeinflusst. Insbesondere kann dies zur Folge haben, dass die Schichtdicke der aufgebrachten Schicht B1 oder B2 in diesen Bereichen unter derjenigen im restlichen Bereich des scheibenartigen Körpers 11 liegt.

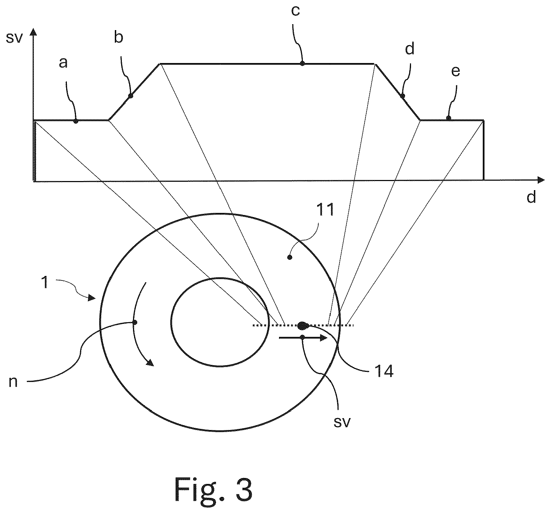

Um diesem entgegenzuwirken kann nun so verfahren werden, wie es in der Fig. 3 prinziphaft gezeigt ist. Dort ist oben über der Bremsscheibe 11 ein Diagramm dargestellt, bei dem der Spurversatz sv über dem Durchmesser d des scheibenartigen Körpers 11 der Bremsscheibe 1 aufgetragen ist.

Durch das Diagramm wird die Veränderung des Spurversatzes sv des durch das Werkzeug 13 (vgl. Fig. 2) erzeugten Laserstrahls 14 entlang des radialen Weges des Werkzeugs 13 über den scheibenartigen Körper 11 ersichtlich. Zu Beginn der Beschichtung, also im Bereich des Innendurchmessers d1 des scheibenartigen Körpers 11, wird der Laserstrahl 14 und das mit ihm zugeführte Pulvermaterial in einer ersten Wegstrecke a mit einem geringeren Spurversatz sv radial über den scheibenartigen Körper 11 bewegt, als es in einer Wegstrecke c der Fall ist.

Die Wegstrecke c macht den größten Anteil an der Wegstrecke des Laserstrahls 14 über den scheibenartigen Körper 11 aus. In der Wegstrecke c ist der Spurversatz sv des Laserstrahls 14 am höchsten und konstant. Schließlich, zum Ende der Beschichtung, also im Bereich des Außendurchmessers d2 des scheibenartigen Körpers 11, weist der Spurversatz sv in einer Wegstrecke e wieder einen niedrigeren Spurversatz sv auf. Der Spurversatz sv in der Wegstrecke e entspricht bevorzugt dem Spurversatz sv in der Wegstrecke a. In dazwischenliegenden Wegstrecken b bzw. d erfolgt zunächst eine stete Vergrößerung des Spurversatzes sv auf den Wert der Wegstrecke c bzw. wieder eine stete Verringerung des Spurversatzes sv auf den Wert der Wegstrecke e mit einem Stillstand des Werkzeugs 13 nach beendeter Beschichtung.

Durch die zweitweise Veränderung des Spurversatzes sv während der Beschichtung, insbesondere durch den niedrigeren Spurversatz sv am Anfang und am Ende der Beschichtung ist es möglich, in den Randbereichen des scheibenartigen Körpers 11 mehr Pulvermaterial p aufzubringen und aufzuschmelzen. Hierdurch kann ausgeglichen werden, dass das Werkzeug 13 bei seiner Beschichtung zur Vermeidung von Overspray nicht vollständig radial außerhalb des scheibenartigen Körpers gestartet und gestoppt wurde.

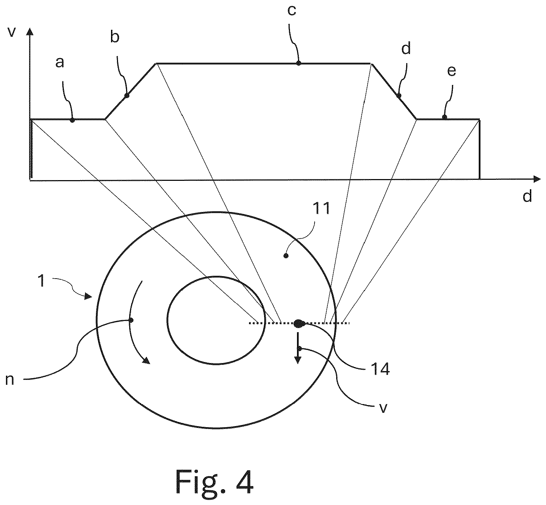

In der Fig. 4 ist eine ähnliche Darstellung wie in Fig. 3 gezeigt. Im Unterschied zur Fig. 3 wurde hierbei jedoch nicht der Spurversatz sv des Werkzeugs 13, sondern es wurde der Vorschub v des Werkzeugs 13 verändert. Dies erfolgte durch entsprechende Anpassung der Drehzahl n, mit der die Bremsscheibe 1 gedreht wurde. Auch hierdurch konnten hinsichtlich der Schichtdicken in den Randbereichen des scheibenartigen Körpers 11 Verbesserungen erzielt werden.

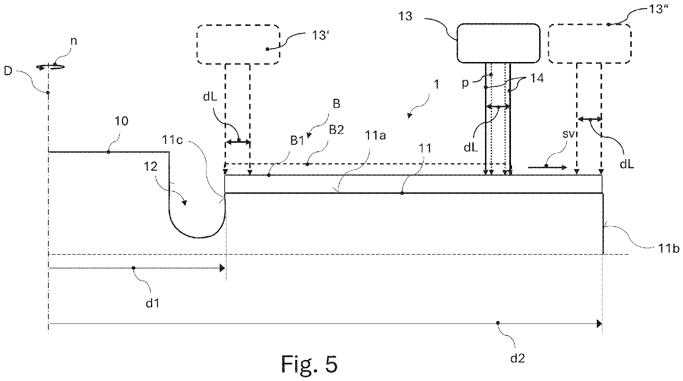

In der Fig. 5 ist nun eine weitere Ausführungsform des Verfahrens ersichtlich. Im Unterschied zur Darstellung gemäß Fig. 2 ist hierbei ist erkennbar, dass das Werkzeug 13 zu Beginn der Beschichtung so positioniert wird, dass ein Außendurchmesser dL des Laserstrahls 14 und damit ein von diesem erzeugter Laserspot vollständig über bzw. auf dem scheibenartigen Körper 11 positioniert sind. Zum Ende der Beschichtung wird das Werkzeug 13 nur so weit nach außen bewegt, dass der Laserspot des Laserstrahls 14 noch vollständig auf den scheibenartigen Körper 11 auftrifft. Dabei grenzt in beiden Fällen ein Außendurchmesser dL des Laserstrahls 14 und damit ein von diesem erzeugter Laserspot an den Innendurchmesser d1 bzw. den Außendurchmesser d2 des scheibenartigen Körpers 11 gerade an. Auf diese Weise kann nahezu vermieden werden, dass der Laserstrahl 14 und das Pulvermaterial p unkontrolliert an andere Stellen außerhalb des scheibenartigen Körpers gelangen und Overspray entstehen kann.

Durch das zu Beginn und zum Ende der Beschichtung über dem scheibenartigen Körper 11 positionierte Werkzeug 13 wird die Schichtdicke der aufgebrachten Schicht B1 und B2 in den Randbereichen des scheibenartigen Körpers 11 ebenfalls beeinflusst. Insbesondere kann dies auch zur Folge haben, dass die Schichtdicke der aufgebrachten Schicht B1 und B2 in diesen Bereichen unter derjenigen im restlichen Bereich des scheibenartigen Körpers 11 liegt.

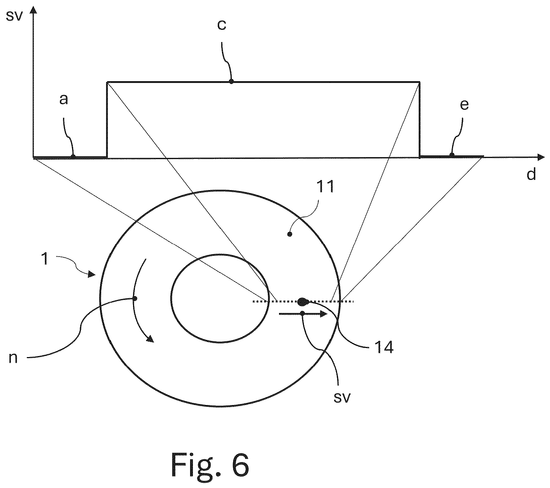

Um diesem entgegenzuwirken kann nun so verfahren werden, wie es in der Fig. 6 prinziphaft gezeigt ist. Dort ist oben über der Bremsscheibe 1 ebenfalls ein Diagramm dargestellt, bei dem der Spurversatz sv über dem Durchmesser d des scheibenartigen Körpers 11 der Bremsscheibe 1 aufgetragen ist.

Im Unterschied zur Fig. 3 sind jedoch nur drei Wegstrecken a, c und e vorhanden. Dies ist dadurch begründet, dass das Werkzeug 13 und damit der Laserstrahl 14 hier zu Beginn (Wegstrecke a) und zum Ende (Wegstrecke e) der Beschichtung keinen Spurversatz sv aufweist. Das Werkzeug 13 bleibt in den Wegstrecken a und e also stehen und bewegt sich nicht. Die Wegstrecken a und e sind daher in diesem Fall eher als Zeitabschnitte zu bezeichnen und besagen, dass das Werkzeug 13 an den gestrichelt dargestellten Positionen (vgl. Fig. 5) für wenigstens eine Umdrehung der Bremsscheibe 1 keinen Spurversatz sv aufweist.

Der Spurversatz sv ist dort also bevorzugt für wenigstens eine Umdrehung des mit einer Drehzahl n gedrehten, scheibenartigen Körpers 11 gleich Null gesetzt. Da während dieser Umdrehung der Laserstrahl 14 also in seiner Spur bleibt und nicht radial versetzt wird, kann bei sonst unveränderten Prozessparametern, wie beispielsweise Vorschub v und Pulvermassenstrom, mehr Laser und Pulvermaterial p auf die Spur gebracht und aufgeschmolzen werden.

In der Wegstrecke c erst steigt der Spurversatz sv sprunghaft von dem Wert Null auf einen Sollwert an und das Werkzeug 13 führt mit dem Laserstrahl 14 eine lineare Bewegung in Richtung des Außendurchmessers d2 des scheibenartigen Körpers 11 aus. Sobald der Laserstrahl 14 mit seinem Außendurchmesser dL am Außendurchmesser d2 des scheibenartigen Körpers 11 angelangt ist, wird der Spurversatz sv wieder schlagartig auf den Wert Null zurückgefahren. Der Prozess der Beschichtung wird jedoch noch bevorzugt für wenigstens eine Umdrehung des scheibenartigen Körpers 11 fortgesetzt.

Besonders bevorzugt ist es, wenn der Spurversatz sv, über die zweite Wegstrecke c hinweg, beim Aufbringen der ersten Schicht B1 in einem Bereich zwischen 0,30 mm/U und 0,45 mm/U, ganz besonders bevorzugt bei etwa 0,37 mm/U und beim Aufbringen der zweiten Schicht B2 in einem Bereich zwischen 0,55 mm/U und 0,75 mm/U, ganz besonders bevorzugt bei etwa 0,64 mm/U liegt. Dabei wird der Spurversatz sv in der ersten Wegstrecke a und in der dritten Wegstrecke e jeweils für drei Umdrehungen auf den Wert Null gesetzt.

Abweichend von den gezeigten Ausführungsbeispielen, bei denen die auf die Bremsscheibe 1 aufgebrachte Beschichtung B aus zwei Schichten (B1 und B2) besteht, ist auch eine andere Anzahl von Schichten denkbar. So kann die Beschichtung B nur eine Schicht aufweisen. Es ist auch denkbar, dass die Beschichtung B mehr als zwei Schichten aufweisen kann.

### Bezugszeichenliste

- 1: Bremsscheibe
- 10: Grundkörper
- 11: scheibenartiger Körper
- 11a: Fläche
- 11b: Randfläche
- 12: muldenartige Vertiefung
- 13: Werkzeug
- 14: Laserstrahl, Laserspot

- a: Wegstrecke
- b: Wegstrecke
- e: Wegstrecke
- B: Beschichtung
- B1: erste Schicht
- B2: zweite Schicht
- c: Wegstrecke
- d: Wegstrecke
- d1: Innendurchmesser
- d2: Außendurchmesser
- dL: Außendurchmesser Laserstrahl
- D: Drehachse
- e: Wegstrecke
- n: Drehzahl
- p: Pulvermaterial
- sv: Spurversatz
- v: Vorschub

## Patentansprüche

1. Verfahren zum Beschichten einer Bremsscheibe (1) aus Grauguss oder Stahl, wobei die Bremsscheibe (1) einen Grundkörper (10) und wenigstens einen sich davon senkrecht zu einer Drehachse (D) der Bremsscheibe (1) radial erstreckenden, scheibenartigen Körper (11) mit einer Fläche (11a) aufweist, deren Flächennormale parallel zur Drehachse (D) ist, wobei auf die Fläche (11a) des scheibenartigen Körpers (11) durch ein Werkzeug (13) im Laserauftragsschweißen eine Beschichtung (B) aufgebracht wird, die aus wenigstens einer, auf die Fläche (11a) des scheibenartigen Körpers (11) aufgebrachten Schicht (B1, B2) besteht, wobei das Werkzeug (13) während der Aufbringung der wenigstens einen Schicht (B1, B2), zumindest für eine überwiegende Zeitdauer des Verfahrens, gegenüber dem scheibenartigen Körper (11) einen Spurversatz (sv) und einen Vorschub (v) aufweist und wobei dem scheibenartigen Körper (11) durch das Werkzeug (13) wenigstens ein Laserstrahl (14) sowie ein zu schmelzendes Pulvermaterial mit einem Pulvermassenstrom zugeführt wird, **dadurch gekennzeichnet, dass** während der Aufbringung der wenigstens einen Schicht (B1, B2) der Spurversatz (sv) des Werkzeugs (13) zeitweise verändert wird.

2. Verfahren nach Anspruch 1, **dadurch gekennzeichnet, dass** während der Aufbringung der wenigstens einen Schicht (B1, B2) zusätzlich noch der Vorschub (v) und/oder der Pulvermassenstrom verändert werden.

3. Verfahren nach einem der vorhergehenden Ansprüche, **dadurch gekennzeichnet, dass** das Werkzeug (13) nach einer zurückgelegten, ersten radialen Wegstrecke (a, b) oder nach einem abgelaufenen, ersten Zeitabschnitt, über eine zweite radiale Wegstrecke (c) hinweg, welche einem Großteil einer Radialerstreckung des scheibenartigen Körpers (11) entspricht, mit einem konstanten Spurversatz (sv) eines bestimmten Wertes bewegt wird, und wobei sich an die zweite radiale Wegstrecke (c) eine dritte radiale Wegstrecke (d, e) oder eine dritter Zeitabschnitt anschließen, wobei der Spurversatz (sv) des Werkzeugs (13) während der ersten radialen Wegstrecke (a, b) oder während des ersten Zeitabschnitts und während der dritten radialen Wegstrecke (d,e) oder während des dritten Zeitabschnitts unter dem Wert des Spurversatzes (sv) in der zweiten radialen Wegstrecke (c) liegt.

4. Verfahren nach einem der vorhergehenden Ansprüche, **dadurch gekennzeichnet, dass** das Werkzeug (13) nach einer zurückgelegten, ersten radialen Wegstrecke (a, b) oder nach einem abgelaufenen, ersten Zeitabschnitt, über eine zweite radiale Wegstrecke (c) hinweg, welche einem Großteil einer Radialerstreckung des scheibenartigen Körpers (11) entspricht, einen konstanten Vorschub (v) eines bestimmten Wertes aufweist, und wobei sich an die zweite radiale Wegstrecke (c) eine dritte radiale Wegstrecke (d, e) oder ein dritter Zeitabschnitt anschließen, wobei der Vorschub (v) des Werkzeugs (13) während der ersten radialen Wegstrecke (a, b) oder während des ersten Zeitabschnitts und während der dritten radialen Wegstrecke (d, e) oder während des dritten Zeitabschnitts unter dem Wert des Vorschubs (v) in der zweiten radialen Wegstrecke (c) liegt.

5. Verfahren nach einem der vorhergehenden Ansprüche, **dadurch gekennzeichnet, dass** das Werkzeug (13) nach einer zurückgelegten, ersten radialen Wegstrecke (a, b) oder nach einem abgelaufenen, ersten Zeitabschnitt über eine zweite radiale Wegstrecke (c) hinweg, welche einem Großteil einer Radialerstreckung des scheibenartigen Körpers (11) entspricht, dem scheibenartigen Körper (11) einen konstanten Pulvermassenstrom in einer bestimmten Höhe zuführt, und wobei sich an die zweite radiale Wegstrecke (c) eine dritte radiale Wegstrecke (d, e) oder ein dritter Zeitabschnitt anschließen, wobei der zugeführte Pulvermassenstrom während der ersten radialen Wegstrecke (a, b) oder während des ersten Zeitabschnitts und während der dritten radialen Wegstrecke (d, e) oder während des dritten Zeitabschnitts über dem Wert des zugeführten Pulvermassenstroms in der zweiten radialen Wegstrecke liegt.

6. Verfahren nach einem der vorhergehenden Ansprüche, **dadurch gekennzeichnet, dass** das Werkzeug (13) beim Aufbringen der wenigstens einen Schicht (B1, B2) in einer Startposition so positioniert und/oder am Ende der Beschichtung so weit radial über das jeweils zu beschichtende Substrat bewegt wird, dass ein durch einen Laserstrahl (14) des Werkzeugs (13) erzeugter Laserspot höchstens zur Hälfte radial über einen Innen- oder Außendurchmesser (d1 oder d2) des scheibenartigen Körpers (11) hinausragt.

7. Verfahren nach Anspruch 6, **dadurch gekennzeichnet, dass** das Werkzeug (13) beim Aufbringen der wenigstens einen Schicht (B1, B2) in einer Startposition so positioniert oder am Ende der Beschichtung so weit radial über das jeweils zu beschichtende Substrat bewegt wird, dass ein durch einen Laserstrahl (14) des Werkzeugs (13) erzeugter Laserspot radial innerhalb des scheibenartigen Körpers (11) liegt und mit seinem Außendurchmesser (dL) an einen Innen- oder Außendurchmesser (d1 oder d2) des scheibenartigen Körpers (11) radial angrenzt.

8. Verfahren nach einem der vorhergehenden Ansprüche, **dadurch gekennzeichnet, dass** zu Beginn oder zum Ende des Aufbringens der wenigstens einen Schicht (B1, B2) der Spurversatz (sv) des Werkzeugs (13) zumindest für eine Umdrehung des scheibenartigen Körpers (11) auf Null gesetzt wird.

9. Verfahren nach Anspruch 8, **dadurch gekennzeichnet, dass** zu Beginn oder zum Ende des Aufbringens der wenigstens einen Schicht (B1, B2) der Spurversatz (sv) des Werkzeugs (13) für drei, vier oder fünf Umdrehungen des scheibenartigen Körpers (11) auf Null gesetzt wird

10. Verfahren nach einem der vorhergehenden Ansprüche, **dadurch gekennzeichnet, dass** eine erste Schicht (B1) und eine zweite Schicht B2) auf die Fläche (11a) des scheibenartigen Körpers (11) aufgebracht werden, wobei der Spurversatz (sv), über die zweite radiale Wegstrecke (c) hinweg, beim Aufbringen der ersten Schicht (B1) in einem Bereich zwischen 0,30 mm/U und 0,45 mm/U und beim Aufbringen der zweiten Schicht (B2) in einem Bereich zwischen 0,55 mm/U und 0,75 mm/U liegt.
